# EUROPÄISCHE PATENTANMELDUNG

(11) **EP 2 441 624 A1**
(43) Veröffentlichungstag der Anmeldung: **18.04.2012**
(21) Anmeldenummer: 11006484.7
(22) Anmeldetag: 08.08.2011
(51) Int. Cl.: B60R 13/02

(54) **Bahnenförmiges Material zum Verkleiden**

(30) Priorität: 16.10.2010 DE 102010048734
(71) Anmelder: K.L. Kaschier- und Laminier GmbH, 48455 Bad Bentheim-Gildehaus (DE)
(72) Erfinder: Arnold, Elke, 48599 Gronau (DE); Voogsgeerd, Frank, 7535 BL Enschede (NL)
(74) Vertreter: Cohausz Hannig Borkowski Wißgott

(57) **Zusammenfassung**

Die Erfindung betrifft ein bahnenförmiges Material (1) zum Verkleiden von Flächen insbesondere im Innenraum von Kraftfahrzeugen insbesondere zum Auskleiden des Kfz-Dachhimmels, wobei auf mindestens einem der beiden äußeren Seitenränder (2) der Materialbahn (1) rückseitig ein Textilband (3) parallel zum Seitenrand (2) aufgeklebt oder aufgeschweißt ist, das als Verarbeitungshilfe (4) über den Seitenrand (2) mehrere Millimeter bis mehrere Zentimeter nach außen vorsteht.

## Beschreibung

Die Erfindung betrifft ein bahnenförmiges Material zum Verkleiden von Flächen, insbesondere im Innenraum von Kraftfahrzeugen, insbesondere zum Auskleiden des Kfz-Dachhimmels.

Es ist bekannt, bei der Verkleidung von Kraftfahrzeuginnenräumen Dekormaterialien wie Gewebe, Gestricke, Echtleder, Kunstleder oder Vliesstoffe wie z.B. Alcantara oder Dinamica zu verwenden. Dieses Dekormaterial ist zum Teil teuer und wird nur in bestimmten Breiten hergestellt. Die angebotene Breite reicht oft nicht für das Auskleiden großer Flächen, wie dem Kraftfahrzeug-Dachhimmel aus, zumal es erforderlich ist, dass Dekormaterial um die Seitenkante des zu beziehenden Formteils hinweg zu ziehen und auf der Rückseite des Formteils zu fixieren. Hierdurch kommt es zu einer Verschwendung wertvollen Materials. Eine größere Bahnbreite kann erreicht werden, in dem zwei Bahnen aneinander genäht werden. Dies führt aber zu unschönen Nähten.

Aufgabe der Erfindung ist es, dass Material der Eingangs genannten Art so zu verbessern, dass es eine Materialeinsparung ermöglicht und auch schmalere Bahnen verwendbar sind.

Diese Aufgabe wird erfindungsgemäß dadurch gelöst, dass auf mindestens einem der beiden äußeren Seitenränder der Materialbahn rückseitig ein Textilband parallel zum Seitenrand aufgeklebt oder aufgeschweißt ist, das als Verarbeitungshilfe über den Seitenrand mehrere Millimeter bis mehrere Zentimeter nach außen vorsteht. Das auf der Materialbahn rückseitig aufgeklebte Textilband bildet mit seinem seitlich überstehenden Bereich eine Verarbeitungshilfe in dem dieser Bereich und nicht mehr das Material selber zum fixieren verwendet wird. Damit wird Material eingespart und auch schmalere Bahnen können verwendet werden.

Vorzugsweise wird hierbei vorgeschlagen, dass das Textilband quer zu seiner Längsrichtung eine höhere Zugfestigkeit aufweist als in Längsrichtung.

Auf der Rückseite des Materials ist häufig eine dünne Schaumstoff-, oder Abstandsgewerkeschicht oder andere Gewebe und Gewirke aufgeklebt. In diesem Fall wird das Textilband zwischen die Schaumstoff-, oder Abstandsgewerkeschicht oder andere Gewebe und Gewirke und der Materialrückseite angeordnet und die Schaumstoffschicht überdeckt das Textilband zumindest bis zum Rand der Materialbahn. Hierbei ist es von Vorteil, wenn das Textilband und die Schaumstoffschicht in einem einzigen Arbeitsgang auf die Rückseite der Materialbahn aufgebracht werden.

Vorzugsweise wird vorgeschlagen, dass es aus Leder oder Kunstleder insbesondere aus einem Leder imitierenden Mikrofaserstoff (wie Alcantara) besteht. Auch kann das Textilband aus einem Gewebe, Gewirke, Filz oder hochverfestigtem Vlies bestehen. Ferner wird vorgeschlagen, dass das Textilband eine Dicke von 0,05 bis 0,5 mm aufweist.

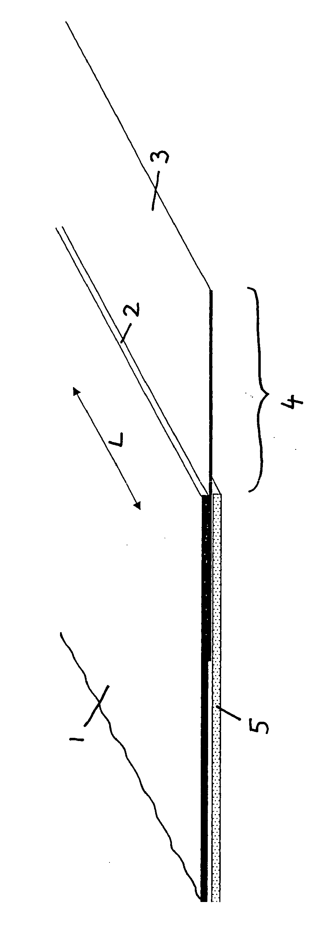

Ein Ausführungsbeispiel der Erfindung ist in der Zeichnung dargestellt und wird im Folgenden näher beschrieben.

Eine Materialbahn 1, mit einer erheblich größeren Länge (in Längsrichtung L) als Breite, weist zwei äußere Längsränder 2 auf und besteht aus einem Dekormaterial wie Leder oder Kunstleder insbesondere aus einem Leder imitierenden Mikrofaserstoff (wie Alcantara). Auf die Rückseite beider Seitenränder der Materialbahn 1 ist jeweils ein Textilband 3 parallel zum Längsrand 2 derart aufgeklebt oder aufgeschweißt, dass es mehrere Millimeter bis mehrere Zentimeter über den Längsrand 2 hinaussteht. Damit steht das Textilband mit einem freien bandförmigen Bereich 4 über die gesamte Länge des Seitenrandes vor und bildet mit diesem vorstehenden Bereich 4 eine Verarbeitungshilfe, so dass dieser Bereich 4 statt des wertvollen Materials zum Befestigen insbesondere zum Umbiegen um die Seitenkante des zu verkleidenden Teils verwendet werden kann.

Ein sicheres und ausreichendes Straffen, bzw. Glattziehen der Materialbahn ist sichergestellt, wenn das Textilband 3 quer zu seiner Längsrichtung eine höhere Zugfestigkeit aufweist als in Längsrichtung. Das Textilband besteht aus einem Gewebe, Gewirke, Filz oder hochverfestigtem Vlies und besitzt eine Dicke von 0,05 bis 0,5 mm. Auf die Rückseite des Materials kann eine dünne Schaumstoffschicht 5 oder Abstandsgewirke, Gewirke- oder Gewebeschicht von 2 bis 6 mm Dicke geklebt sein und das Textilband 3 liegt zwischen der Schaumstoffschicht 5 und der Materialbahn 1. Hierbei können das Textilband 3 und die Schaumstoffschicht 5 in einem Arbeitsgang gleichzeitig auf die Rückseite der Materialbahn aufgebracht werden.

## Patentansprüche

1. Bahnenförmiges Material (1) zum Verkleiden von Flächen insbesondere im Innenraum von Kraftfahrzeugen insbesondere zum Auskleiden des Kfz-Dachhimmels, **dadurch gekennzeichnet, dass** auf mindestens einem der beiden äußeren Seitenränder (2) der Materialbahn (1) rückseitig ein Textilband (3) parallel zum Seitenrand (2) aufgeklebt oder aufgeschweißt ist, das als Verarbeitungshilfe über den Seitenrand (2) mehrere Millimeter bis mehrere Zentimeter nach außen vorsteht.

2. Material nach Anspruch 1,**dadurch gekennzeichnet, dass** das Textilband (3) quer zu seiner Längsrichtung eine höhere Zugfestigkeit aufweist als in Längsrichtung.

3. Material nach Anspruch 1 oder 2, **dadurch gekennzeichnet, dass** auf die Rückseite des Materials (1) eine dünne Schaumstoff-, bzw. Abstandsgewirkeschicht, Gewirke oder Gewebe(5) geklebt ist und das Textilband (3) zwischen der Schaumstoffschicht (5) und der Materialbahn (1) liegt.

4. Material nach einem der vorherigen Ansprüche, **dadurch gekennzeichnet, dass** es aus Leder oder Kunstleder insbesondere aus einem Leder imitierenden Mikrofaserstoff (wie Alcantara) besteht.

5. Material nach einem der vorherigen Ansprüche, **dadurch gekennzeichnet, dass** das Textilband (3) aus einem Gewebe, Gewirke, Filz oder hochverfestigtem Vlies besteht.

6. Material nach einem der vorherigen Ansprüche, **dadurch gekennzeichnet, dass** das Textilband (3) eine Dicke von 0,05 bis 0,5 mm aufweist.

7. Verfahren zum Herstellen eines bahnenförmigen Materials (1) nach einem der vorherigen Ansprüche, **dadurch gekennzeichnet, dass** auf die Rückseite der Materialbahn (1) das Textilband (3) und eine das Textilband und die Rückseite bedeckende dünne Schaumstoffschicht (5) in einem Arbeitsgang aufgebracht werden.
